# FASCICULE DE BREVET EUROPEEN

(11) **EP 3 013 605 B1**
(45) Date de publication et mention de la délivrance du brevet: **16.05.2018**
(21) Numéro de dépôt: 14738754.2
(22) Date de dépôt: 26.06.2014
(51) Int. Cl.: B60C 11/01, B60C 13/02

(54) **PNEUMATIQUE**
REIFEN
TYRE

(30) Priorité: 28.06.2013 FR 1356249
(43) Date de publication de la demande: 04.05.2016
(73) Titulaire: Compagnie Générale des Etablissements Michelin, 63000 Clermont-Ferrand (FR)
(72) Inventeur: FERIGO, Hervé, F-63040 Clermont-Ferrand Cedex 9 (FR); EMORINE, Hélène, F-63040 Clermont-Ferrand Cedex 9 (FR)
(74) Mandataire: Bauvir, Jacques
(86) Numéro de dépôt international: PCT/EP2014/063497
(87) Numéro de publication internationale: WO 2014/207093

(56) Documents cités:
- EP-A1- 2 181 865
- WO-A1-2009/029088
- WO-A1-2011/162748
- WO-A2-03/020538
- JP-A- S 624 611
- US-A1- 2009 107 600
- US-B1- 6 189 586
- US-B1- 6 533 007

## Description

L'invention se rapporte aux pneumatiques à carcasse radiale ou à carcasse croisée.

Les pneumatiques à carcasse radiale se sont progressivement imposés sur différents marchés, et notamment le marché des pneumatiques pour véhicules de tourisme. Ce succès est dû en particulier aux qualités d'endurance, de confort et de faible résistance au roulement de la technologie radiale.

Les principales parties d'un pneumatique sont la bande de roulement, les flancs et les bourrelets. Les bourrelets sont destinés à entrer en contact avec la jante. Dans un pneumatique de technologie radiale, chacune des principales parties constituant le pneumatique, à savoir la bande de roulement, les flancs et les bourrelets, a des fonctions bien séparées les unes des autres, et a par conséquent, une constitution spécifique bien connue.

Le pneumatique radial est essentiellement renforcé par une armature de carcasse comprenant au moins une nappe de carcasse présentant un angle sensiblement égal à 90° par rapport à la direction circonférentielle du pneumatique. Cette armature de carcasse est surmontée radialement à l'extérieur, et sous la bande de roulement, de nappes de renfort formant une ceinture.

Le pneumatique à carcasse croisée se distingue d'un pneumatique de technologie radial par la présence d'au moins deux nappes carcasse croisées dont l'angle est différent de 90° par rapport à la direction circonférentielle du pneumatique. Les nappes sont dites « croisées » parce que les angles sont de signes opposés d'une nappe à l'autre.

On rappelle que, selon l'invention, la direction circonférentielle du pneumatique est la direction comprise dans un plan perpendiculaire à l'axe de rotation du pneumatique et tangente au renforcement de ceinture du pneumatique,

Suite à l'apparition de pneumatique à carcasse radiale, certains pneumatiques à carcasse croisée ont également été pourvus d'un renforcement de ceinture sous la bande de roulement.

Dans ces deux types de pneumatique, la bande de roulement, en contact directement avec le sol, a notamment pour fonction d'assurer le contact avec la route et doit s'adapter à la forme du sol. Les flancs, quant à eux, absorbent les irrégularités du sol tout en transmettant les efforts mécaniques nécessaires pour porter la charge du véhicule et assurer son mouvement.

Le renforcement de ceinture est une armature qui doit, d'une part, être suffisamment rigide vis-à-vis des déformations sur chant afin que le pneumatique développe les poussées de dérive nécessaires à son guidage, et transmettre le couple moteur ou freineur, et d'autre part, être très souple en flexion, c'est-à-dire autoriser des variations de courbure de son plan pour assurer une surface de contact du pneumatique sur le sol suffisante.

Par conséquent, le renforcement de ceinture a généralement une structure composite, lui permettant de présenter la rigidité requise pour un poids relativement faible. Le renforcement de ceinture est généralement constitué d'au moins deux nappes présentant des angles différents, comprenant des renforts, en forme de câble, enrobés de caoutchouc. Les éléments de renfort sont croisés d'une nappe à l'autre par rapport à la direction circonférentielle et sont symétriques ou non par rapport à cette direction.

On dénomme ci-après par :
- « direction longitudinale ou circonférentielle » : direction de roulement du pneumatique,
- « direction radiale » : direction coupant l'axe de rotation du pneumatique et perpendiculaire à celui-ci,
- « direction axiale » : direction parallèle à l'axe de rotation du pneumatique,
- « radialement intérieur à » : signifie plus proche de l'axe de rotation,
- « radialement extérieur à » : signifie plus éloigné de l'axe de rotation,
- « plan équatorial ou plan médian » : plan perpendiculaire à l'axe de rotation du pneumatique et qui divise le pneumatique en deux moitiés sensiblement égales,
- « direction transversale du pneumatique » : direction parallèle à l'axe de rotation,
- « plan radial ou méridien » : un plan qui contient l'axe de rotation du pneumatique.

Il est déjà connu du document JP2008068716 A des pneumatiques comprenant des flancs avec des renforts extérieurs, destinés à réduire la température interne aux endroits du pneumatique où des détériorations peuvent apparaître avec l'usage.

Mais la disposition de ces renforts sur les flancs ne permet pas de renforcer correctement les flancs d'un pneumatique lors de chocs latéraux, tels que des chocs sur les trottoirs ou dans des nids de poule.

En effet, de tels chocs effectués à différentes vitesses et/ou avec différents angles d'attaques, sur des architectures classiques de pneumatique peuvent provoquer des avaries, pouvant parfois aller jusqu'à la mise au rebut du pneumatique.

En outre, la tendance actuelle d'utiliser des jantes en aluminium, plutôt qu'en acier pour contribuer notamment à l'aspect esthétique global du véhicule, a pour conséquence de provoquer, lors de chocs latéraux sur le pneumatique, la rupture des constituants de la carcasse à partir de vitesses nettement plus faibles.

Par ailleurs, le souhait actuel d'utiliser des pneumatiques comprenant des hauteurs de flancs de plus en plus petites, a encore pour autre conséquence qu'un choc sur de tels flancs provoque une dégradation avec une intensité plus forte qu'avec des flancs plus grands, et donc plus détériorante pour le pneumatique.

Il est encore connu du document JP 2003 237317 un pneumatique comprenant des portions discontinues de gomme élastomère ayant différentes rigidités, et disposées sur les flancs de manière à réduire le bruit inhérent à son fonctionnement.

Le brevet FR 888 453 décrit par ailleurs des enveloppes pneumatiques dont les deux côtés comprennent des saillies en gomme élastomère destinées à vérifier que la pression du pneumatique est conforme à la charge du fait de la forme géométrique qu'elles présentent.

Enfin, le document US2 354 715 divulgue la présence d'excroissances de gomme élastomère comprenant des éléments métalliques, et disposées sur les extrémités de la bande de roulement d'un pneumatique destinées à empêcher son dérapage lors du roulage.

Le document EP 2 181 865 A1 décrit un pneumatique comprenant des protubérances discontinues selon un axe radial à la surface du flanc, avec la condition que l'ensemble des protubérances disposées sur la partie radialement inférieure du pneumatique présentent une surface totale supérieure à celles disposées sur la partie radialement supérieure du pneumatique, de manière à en diminuer la température lors de son fonctionnement.

Le document US 6 533 007 B1 décrit un pneumatique tout terrain comprenant des excroissances sur les flancs destinées à améliorer l'adhérence du pneumatique. Les excroissances sont la continuité des pains de gomme de la bande de roulement.

Le document US 2009/107600 A1 décrit un pneumatique tout terrain dont la bande de roulement est renforcée pour améliorer la traction sur sol irrégulier et diminuer les perforations.

Aussi, il subsiste le besoin de pouvoir encore améliorer la robustesse des flancs des pneumatiques vis-à-vis des chocs latéraux, sans pour autant changer leurs dimensions actuelles.

L'invention a donc pour objet un pneumatique pour ensemble roulant comprenant une jante et un pneumatique, ledit pneumatique comportant au moins une armature de carcasse surmontée radialement à l'extérieur d'une armature de sommet, elle-même radialement à l'intérieur d'une bande de roulement ayant deux extrémités axialement les plus extérieures, ladite armature de sommet étant constituée d'au moins une couche d'éléments de renforcement, ladite bande de roulement étant reliée à deux bourrelets par l'intermédiaire de deux flancs, lesdits bourrelets étant destinés à entrer en contact avec une jante ayant des hauts de crochet de jante, chaque bourrelet comportant au moins un élément de renforcement circonférentiel, lesdits flancs comportant, sur leur surface extérieure, une série de protubérances alternées avec des creux, ladite bande de roulement comprenant à au moins une extrémité axialement la plus extérieure un sillon circonférentiel.

Le pneumatique se caractérise en ce que chaque protubérance est disposée à la surface d'un flanc, les différentes protubérances étant disposées de manière régulière ou irrégulière, et de manière continue, entre un point A et un point E,
- ledit point A étant disposé à l'intersection de la surface radialement extérieure de la bande de roulement et du flanc, et d'un axe radial ZZ' distant du plan équatorial AA' d'une longueur L_{A} comprise entre ½ (L-60mm) et ½ (L-10mm), L étant la grosseur boudin nominale, et
- ledit point E étant disposé, au choix, dans un rayon compris dans :
   ∘ R₂ < E < (0,75 R₁ + 0,25R₂), R₂ étant le rayon du haut du crochet de jante et R₁ étant le rayon de la grosseur boudin nominal - (Intervalle I), ou dans
   ∘ 0,95R₁ < E < (0,75R_{A} + 0,25 R₁), R₁ étant le rayon de la grosseur boudin nominal, et R_{A} étant le rayon du point A (Intervalle II),
et en ce qu'au moins une protubérance interrompt partiellement ou totalement ou n'interrompt pas ledit sillon circonférentiel.

Par les termes « n'interrompt pas », on entend que l'extrémité radialement supérieure d'une protubérance est soit adjacente au sillon circonférentiel, soit distante d'une distance « d » sensiblement disposée selon une direction radiale et comprise entre 2 et 10mm.

Par les termes « interrompt partiellement », on entend que l'extrémité radialement supérieure d'une protubérance coupe partiellement le sillon circonférentiel.

Par les termes « interrompt totalement », on entend que l'extrémité radialement supérieure d'une protubérance rejoint l'extrémité axialement extérieure de la bande de roulement qui lui est la plus proche.

Lorsque la protubérance interrompt partiellement le sillon, cette interruption est effectuée entre 2 et 97% de l'écartement axiale total dudit sillon, de préférence entre 20 et 80%, et plus préférentiellement entre 30 et 50%.

Le sillon est une zone d'une largeur donnée située aux environs du point A, et présentant un taux de vide longitudinal supérieure à 70%.

Par le terme « régulier », on définit que les protubérances disposées entre les points A et E sont disposées à l'aplomb l'une de l'autre selon une direction radiale, avec éventuellement une symétrie, et de manière uniforme.

Par le terme « irrégulier », on définit que les protubérances disposées entre les points A et E sont disposées de manière décalée selon deux directions radiales parallèles sans symétrie et de manière non uniforme.

Le rayon R_{A} est fonction de la longueur L_{A}, elle-même fonction de la longueur L.

R₁ peut être compris dans l'intervalle compris entre (0,8R₂ + 0,2R_{A}) et (0,2R₂ + 0,8R_{A}).

On définit la grosseur boudin nominale L par la grosseur boudin d'un pneumatique monté sur jante et gonflé ; la grosseur boudin étant, selon l'invention, la distance entre l'extérieur des flancs d'un pneumatique gonflé, en incorporant le relief de surface des flancs. R₁ correspond au rayon du point situé sur la surface extérieure du flanc le plus éloigné du plan médian.

Le pneumatique selon l'invention présente l'avantage d'être de réalisation rapide et facile, et de résister à des chocs latéraux particulièrement violents sans créer des dommages importants pouvant éventuellement entraîner des risques notables pour les passagers du véhicule.

Le pneumatique selon l'invention présente en outre l'avantage de présenter des performances globales, tels que résistance au roulement, usure, endurance semblables à celles des pneumatiques sans protubérances sur le flanc.

Un autre objet de l'invention est un ensemble monté comprenant une jante et le pneumatique tel que décrit ci-dessus.

De préférence, au moins une protubérance a une hauteur et une longueur, ladite hauteur étant optimale au centre de ladite longueur de ladite protubérance. De préférence, la hauteur d'une protubérance est minimale au niveau de la grosseur boudin nominale.

Selon l'invention, au moins deux protubérances ont une longueur différente l'une de l'autre.

Chaque protubérance a une hauteur moyenne comprise entre 3 et 10mm.

Chaque protubérance a une largeur moyenne comprise entre 4 et 12mm.

La hauteur moyenne de chaque protubérance, peut être comprise entre 5 et 8mm. Les protubérances peuvent avoir une hauteur moyenne supérieure à 80% de la hauteur maximale sur au moins 80% de la distance entre les points A et E. On définit la hauteur moyenne comme étant la moyenne de la hauteur comprise entre les extrémités d'une protubérance.

Les protubérances présentent de préférence un angle de dépouille α inférieure ou égale à 20°, et de préférence compris entre 5 et 8°.

Deux protubérances adjacentes sont espacées l'une de l'autre d'une distance moyenne inférieure ou égale à 2 fois la largeur moyenne d'une protubérance, et peuvent être sensiblement parallèles l'une par rapport à l'autre.

Les protubérances recouvrent de préférence au moins 40% de la surface circonférentielle totale du flanc entre les points A et E.

Chaque protubérance, de forme géométrique définie ou quelconque, peut comprendre une fibre neutre, passant par une extrémité radialement la plus intérieure et par une extrémité radialement la plus extérieure, et présentant un angle β, par rapport à la direction radiale ZZ', compris entre -60° et +60°.

Le flanc côté extérieur du pneumatique (c'est-à-dire extérieur lorsqu'il est monté sur le véhicule) et le flanc côté intérieur du pneumatique (c'est-à-dire intérieur lorsqu'il est monté sur le véhicule) peuvent comprendre chacun des protubérances selon toutes les combinaisons d'inclinaisons possibles.

De même les quatre pneumatiques d'un véhicule peuvent présenter des inclinaisons variables selon chaque essieu et/ou selon un même essieu.

De préférence, le creux entre deux protubérances adjacentes s'étend axialement dans le prolongement du creux d'un sillon circonférentiel de la bande de roulement, passant par le point A, ledit sillon étant disposé sur au moins une extrémité axiale de la bande de roulement.

De préférence, le creux entre deux protubérances adjacentes présente un angle, avec la direction circonférentielle compris entre -15° et +15° dans une zone du flanc proche du point A, c'est-à-dire située entre 3 et 8mm.

De préférence, selon un plan radial défini, et quel que soit cedit plan situé entre les points A et E, la somme des largeurs, pouvant être variables, de chaque protubérance, dans la direction circonférentielle, est supérieure ou égale à 60% de la longueur circonférentielle totale, ladite longueur étant mesurée à l'emplacement des protubérances.

Le pneumatique selon l'invention peut présenter un rapport [somme des largeurs totales de chaque protubérance] / 2πR supérieure ou égale à 30%, et plus préférentiellement égale à 60%, les largeurs de chaque protubérance étant définies à 50% de la hauteur totale de ladite protubérance et pour tout rayon R du pneumatique compris dans l'intervalle R_{E}<R<Rₐ avec Rₐ le rayon du point A et R_{E} le rayon du point E.

La protubérance peut être présente sur toute la longueur circonférentielle du flanc du pneumatique.

Les protubérances présentes sur les flancs selon l'invention sont constituées en un matériau identique à celui des flancs.

L'invention va maintenant être décrite à l'aide des exemples et des dessins qui suivent et qui sont donnés uniquement à titre d'illustration, et sur lesquels :
- la figure 1 représente, de manière schématique, la coupe d'un pneumatique de l'invention selon un plan radial,
- les figures 2A et 2B représentent, de manière schématique et en trois dimensions, une portion d'un flanc et de la bande de roulement correspondante d'un pneumatique selon l'invention,
- la figure 3 représente, de manière schématique, une portion agrandie d'un flanc comprenant des protubérances d'un pneumatique selon l'invention,
- la figure 4 représente une vue en coupe, de deux protubérances adjacentes d'un pneumatique selon l'invention, selon l'axe AA de la figure 3,
- les figures 5A et 5B représentent, selon une première variante, une portion d'une partie radialement extérieure d'un flanc et la bande de roulement correspondante en trois dimensions d'un pneumatique selon l'invention,
- la figure 6A représente, selon une seconde variante, une portion d'une partie radialement extérieure d'un flanc et de la bande de roulement correspondante en trois dimensions dont certaine protubérance interrompt totalement un sillon circonférentiel d'un pneumatique selon l'invention,
- la figure 6B représente, selon une autre variante, une portion d'une partie radialement extérieure d'un flanc et de la bande de roulement correspondante en trois dimensions dont certaine protubérance interrompt partiellement un sillon circonférentiel d'un pneumatique selon l'invention,
- la figure 7A représente une vue partielle en coupe radiale d'une partie d'un flanc et d'une partie de la bande de roulement correspondante selon une autre variante,
- la figure 7B représente une vue partielle en coupe radiale d'une partie d'un flanc et d'une partie de la bande de roulement correspondante selon une autre variante d'un pneumatique selon l'invention,
- la figure 8 représente de manière schématique et en trois dimensions, une portion d'un flanc et du bourrelet correspondant d'un pneumatique selon l'invention.

Sur les différentes figures, les éléments techniques identiques ou similaires portent la même référence. Leur description n'est pas répétée afin de ne pas alourdir le texte.

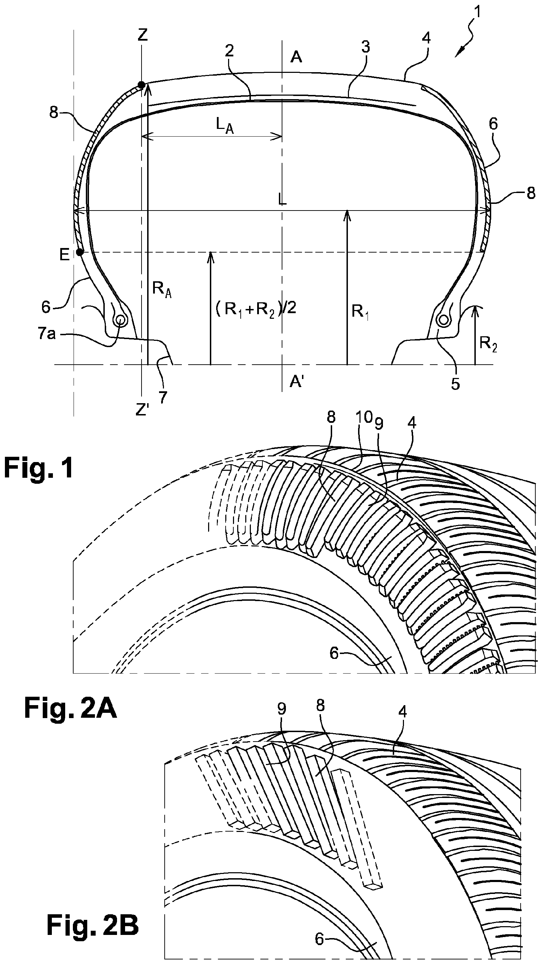

Comme le montre la figure 1, le pneumatique pour véhicule de tourisme de référence générale 1 comprend une armature de carcasse 2 radialement intérieure à un renforcement de ceinture de référence générale 3, ledit renforcement de ceinture 3 étant radialement intérieur à une bande de roulement 4 elle-même reliée à deux bourrelets 5 par l'intermédiaire de deux flancs 6. Les bourrelets 5 sont destinés à entrer en contact avec une jante 7 (partiellement représentée). Chaque bourrelet comprend au moins un élément de renforcement circonférentiel 7a. Les flancs comportent, sur leur surface, une série de protubérances 8 régulièrement alternées avec des creux 9 (montrés sur la figure 2).

Sur la figure 1 on peut voir une protubérance 8, en coupe, ayant une fibre neutre continue. On rappelle ici qu'on appelle une fibre neutre un axe neutre qui passe sensiblement au centre du volume de chaque protubérance, et qui ne subit ni raccourcissement ni allongement lorsqu'il est soumis à une compression et/ou à une dépression.

Comme le montre la figure 1, les protubérances 8 sont disposées, à la surface du flanc, sur une longueur de fibre neutre continue qui s'étend d'un point A à un point E.

Le point E est disposé à un rayon inférieur à (0,75R₁ + 0,25R₂). R₁ est le rayon de la grosseur boudin nominale L, et R_{A} est le rayon du point A.

Le point E est disposé à un rayon de 232mm pour un pneumatique de référence 205/55 R 16 monté sur jante 6.5 J 16 pour lequel R_{A} est égal à 298mm, R₂ est égal à 220mm et R₁ est égal à 261mm.

La définition selon l'invention de la grosseur boudin est adaptable à tout type d'enveloppe combiné à tout type de jante.

Le point A est disposé à l'intersection de la surface radialement extérieure de la bande de roulement et du flanc, et d'un axe ZZ' distant du plan équatorial AA' d'une longueur L_{A} égale à ½ (L - 45mm). Pour un pneumatique de référence 205/55 R 16 R_{A} est égal à 298mm.

Les protubérances ne sont pas des éléments de caoutchouc insérés, ajoutés, dans le caoutchouc des flancs, mais sont obtenues par moulage lors de l'étape de cuisson. Elles sont obtenues de manière similaire à celle des sculptures réalisées sur la bande de roulement.

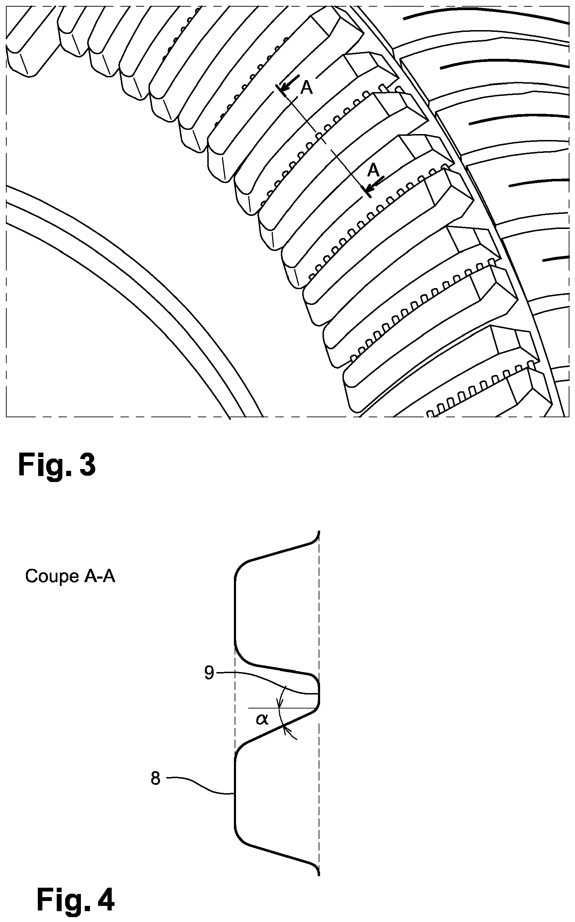

La figure 2A représente une alternance de protubérances 8 et de creux 9, représentée de manière agrandie sur les figures 3 et 4. La figure 2B représente une variante de la figure 2A où les protubérances sont disposées selon un angle par rapport à la direction axiale. Selon ce mode de réalisation, les protubérances 8 continues les plus longues ont une longueur de fibre neutre d'environ 75mm pour un pneumatique de dimension 205/55 R 16. Elles sont disposées radialement (figure 2) de manière sensiblement parallèle les unes à côté des autres, sont espacées d'environ 4,50mm, ont une hauteur d'environ 6mm, et une largeur d'environ 8,6mm dans leur partie axialement la plus interne.

L'angle de dépouille α est d'environ 8°. Une telle valeur d'angle de dépouille permet un démoulage du pneumatique après cuisson sans détérioration de la structure finale.

Selon ce mode de réalisation, les protubérances présentent un rapport [somme des largeurs de chaque protubérance] / 2πR égale à 30%, à mi-hauteur et ne présentent aucun angle par rapport au plan radial.

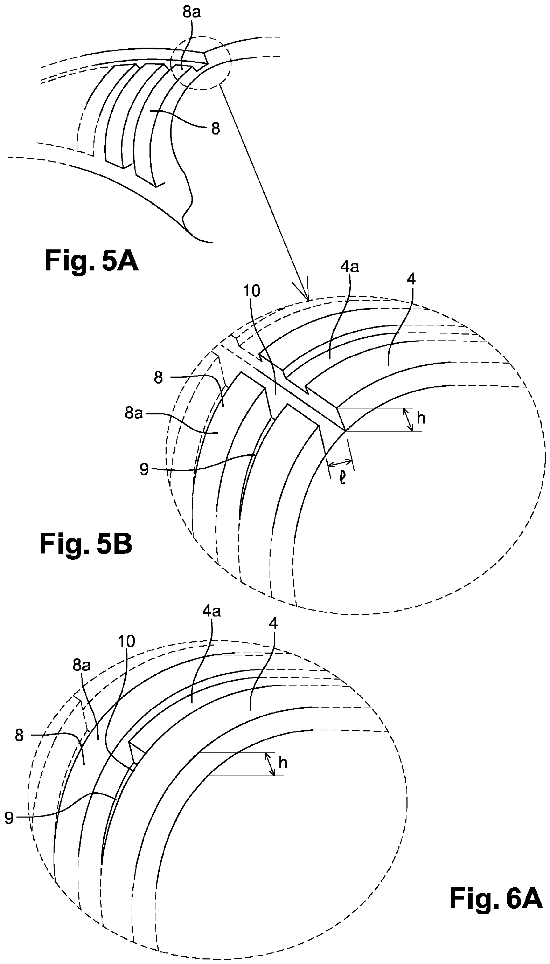

La figure 5A montre une représentation en trois dimensions de la partie radialement extérieure 8a des protubérances 8 et son agrandissement sur la figure 5B de la figure 5A. Sur ces figures 5A et 5B, la partie 8a de chaque protubérance 8 ainsi que les creux 9 sont adjacents à un sillon 10 disposé, de manière circonférentielle, sur la surface de la bande de roulement 4 à son extrémité axialement la plus extérieure 4a. Le sillon 10 n'est pas interrompu dans sa longueur.

Selon ce mode particulier de réalisation, le sillon 10 a une largeur axiale « 1» selon l'axe YY'pouvant être comprise entre 2 et 10mm, et une hauteur radiale « h » selon l'axe ZZ'comprise entre 3 et 8mm.

La figure 6A montre également une représentation en trois dimensions de la partie radialement extérieure 8a des protubérances 8. A la différence des figures 5A et 5B, le sillon 10 est interrompu. En effet, l'extrémité 8a des protubérances 8 et les creux adjacents 9 coupent en totalité le sillon 10 dans la direction circonférentielle du pneumatique.

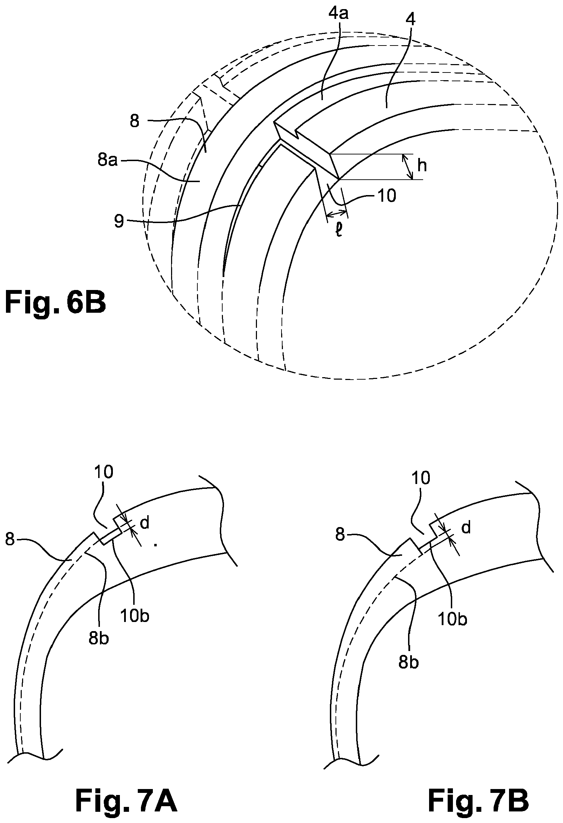

La figure 6B montre une autre variante d'une représentation en trois dimensions de ladite partie radialement extérieure 8a des protubérances 8. Sur cette figure, la protubérance 8 coupe partiellement le sillon 10 dans la direction circonférentielle du pneumatique.

Les figures 7A et 7B montrent que la portion radialement intérieure 8b (représenté en pointillés) de la protubérance 8 est distante d'une épaisseur « d » de la partie radialement intérieure 10b du creux 10. Cette épaisseur «d» est inférieure à 2mm, et de manière préférée inférieure à 1mm.

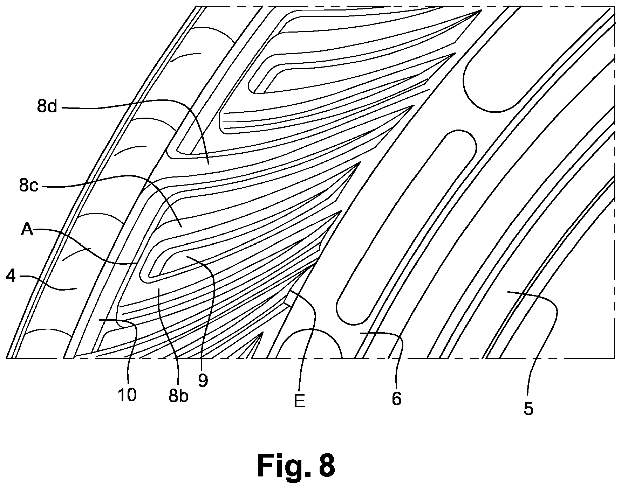

La figure 8 montre que l'extrémité radialement supérieure des protubérances 8b et 8c est adjacente au sillon circonférentiel 10, et que l'extrémité radialement supérieure de la protubérance 8d interrompt totalement le sillon 10 pour rejoindre les pains de gomme élastomère de la bande de roulement 4. Cette figure montre ainsi une réalisation d'un pneumatique selon l'invention où chaque protubérance 8b, 8c est alternée avec un creux 9. Chacune des protubérances 8b, 8c s'étendent du point A au point E.

Le pneumatique selon l'invention est obtenu après cuisson et moulage dans un moule de cuisson de manière classique.

### Exemple 1 : Test choc trottoir

Ce test a été effectué avec un pneumatique de référence 205/55 R16 comprenant différentes représentations de protubérances, au même pneumatique témoin sans protubérances.

Les pneumatiques P1 à P4 sont différents pneumatiques selon l'invention.

Les protubérances des pneumatiques P1 et P4 ne présentent aucun angle d'inclinaison par rapport à la direction radiale.

Les protubérances des pneumatiques P2 et P3 présentent un angle d'inclinaison par rapport à la direction radiale.

La colonne « Angle » correspond à l'angle que fait chaque protubérance avec la direction radiale du pneumatique.

L'angle de dépouille α est l'angle que fait chaque extrémité d'une protubérance, comme représenté sur la figure 4, destiné à en faciliter le démoulage.

Le pas d'une protubérance est la distance qui s'étend du centre d'un premier creux au centre d'un second creux adjacent au premier.

H (mm) est la hauteur moyenne des protubérances, 1 (mm) est la largeur moyenne des protubérances.

R₁ est le rayon de la grosseur boudin nominale, R₂ est le rayon du haut de crochet de jante, R_{E} est le rayon correspondant au point E, et R_{A} le rayon du point A.

La grosseur boudin avec les reliefs comprend la grosseur boudin nominale ainsi que la hauteur des protubérances présentent à la surface des flancs.

Le tableau I ci-après rassemble les caractéristiques techniques mesurables des différents pneumatiques selon l'invention.

**Tableau I**

| **Pneumatique** | **Témoin** | **P1** | **P2** | **P3** | **P4** |
|---|---|---|---|---|---|
| **Angle (degré)** | aucun | 0 | +60 | -60 | 0 |
| **Angle de dépouille de protubérance (degré)** | - | 8 | 8 | 6 | 6 |
| **Hauteur protubérance H (mm)** | - | 8 | 8 | 6 | 5 |
| **Largeur protubérance 1 (mm)** | - | 10 | 10 | 5 | 7 |
| **Longueur de fibre neutre de la protubérance (mm)** | - | 53 | 75 | 75 | 55 |
| **R₁ (mm)** | 260 | 261 | 261 | 261 | 261 |
| **R₂ (mm)** | 220 | 220 | 220 | 220 | 220 |
| **R_{E} (mm)** | - | 224.1 | 224.1 | 224.1 | 228 |
| **R_{A} (mm)** | - | 298 | 298 | 298 | 298 |
| **Grosseur boudin avec reliefs (mm)** | 212 | 223 | 223 | 220 | 223 |
| **Pas (mm)** | 0 | 15 | 15 | 7 | 14 |

Ce test a été réalisé dans les conditions opératoires suivantes.

Le pneumatique, monté sur une jante 6.5 J 16 et gonflé à la pression de 1.9bars, est disposé sur l'essieu avant droit d'un véhicule, et supporte une charge de 350kg.

Le test consiste à effectuer, à différentes vitesses, un choc dit « choc trottoir » du pneumatique sur un bloc en métal de hauteur 90mm, selon un angle de 30° avec le bloc, par rapport à la direction de roulage du pneumatique.

Ce test est effectué avec un pneumatique témoin (sans protubérance) et différents pneumatiques selon l'invention qui comprennent des protubérances présentant, ou non, un angle avec l'axe radial du pneumatique.

Les résultats du tableau II ci-après montrent le gain obtenu en vitesse, entre un pneumatique témoin (résultat égal à 100) et les différents pneumatiques selon l'invention, cités précédemment, avant la crevaison du pneumatique.

**Tableau II**

| **Pneumatique** | **Gain en vitesse (%)** |
|---|---|
| **Témoin** | 100 |
| **P1** | 120 |
| **P2** | 125 |
| **P3** | 135 |
| **P4** | 120 |

Les résultats du tableau II montrent bien que le pneumatique selon l'invention, quel que soit le mode de réalisation, permet une nette augmentation de la vitesse d'attaque du trottoir avant sa crevaison.

### Exemple 2 : Test choc trottoir

Ce test a été effectué avec un pneumatique de référence 245/40 R18 comprenant différentes représentations de protubérances, au même pneumatique témoin sans protubérances.

Les pneumatiques P1 à P4 sont différents pneumatiques selon l'invention.

Les différentes caractéristiques techniques mentionnées pour l'exemple 1 sont reproduites dans l'exemple 2.

Le tableau III ci-après rassemble les caractéristiques techniques mesurables des différents pneumatiques selon une variante de l'invention.

**Tableau III**

| **Pneumatique** | **Témoin** | **P1** | **P2** |
|---|---|---|---|
| **Angle (degré)** | aucun | 0 | +30 |
| **Angle de dépouille de protubérance (degré)** | - | 8 | 8 |
| **Hauteur protubérance H (mm)** | - | 6 | 6 |
| **Largeur protubérance 1 (mm)** | - | 6 | 6 |
| **Longueur de fibre neutre de la protubérance (mm)** | - | 45 | 52 |
| **R₁ (mm)** | 277 | 277 | 277 |
| **R₂ (mm)** | 248 | 248 | 248 |
| **R_{E} (mm)** | - | 272 | 272 |
| **R_{A} (mm)** | - | 313 | 313 |
| **Grosseur boudin avec reliefs (mm)** | 249 | 249 | 249 |
| **Pas (mm)** | 0 | 12 | 12 |

Ce test a été effectué dans les mêmes conditions opératoires que celles expliquées dans l'exemple 1 avec une jante 8.5 J 18 et un pneumatique gonflé à la pression de 2.3 bars, le tout monté sur un l'essieu avant droit d'un véhicule, et supportant une charge de 580kg.

Les résultats du tableau IV ci-dessous montrent le gain obtenu en vitesse, entre un pneumatique témoin (résultat égal à 100) et les différents pneumatiques selon l'invention, cités précédemment, avant la crevaison du pneumatique.

**Tableau IV**

| **Pneumatique** | **Gain en vitesse (%)** |
|---|---|
| **Témoin** | 100 |
| **P1** | 128 |
| **P2** | 130 |

Les résultats du tableau IV montrent bien que le pneumatique selon l'invention, quel que soit le mode de réalisation, permet une nette augmentation de la vitesse d'attaque du trottoir avant sa crevaison.

## Revendications

1. Pneumatique pour ensemble roulant comprenant une jante et un pneumatique, ledit pneumatique comportant au moins une armature de carcasse (2) surmontée radialement à l'extérieur d'une armature de sommet (3), elle-même radialement à l'intérieur d'une bande de roulement (4) ayant deux extrémités axialement les plus extérieures, ladite armature de sommet (3) étant constituée d'au moins une couche d'éléments de renforcement, ladite bande de roulement (4) étant reliée à deux bourrelets (5) par l'intermédiaire de deux flancs (6), lesdits bourrelets (5) étant destinés à entrer en contact avec une jante (7) ayant des hauts de crochet de jante (7b), chaque bourrelet (5) comportant au moins un élément de renforcement circonférentiel, lesdits flancs (6) comportant, sur leur surface extérieure, une série de protubérances (8) alternées avec des creux (9), chaque protubérance (8) étant disposée à la surface du flanc (6), de manière régulière ou irrégulière, et de manière continue, entre un point A et un point E, ladite bande de roulement (4) comprenant à au moins une extrémité axialement la plus extérieure (4a) un sillon circonférentiel (10), **caractérisé en ce que**
- ledit point A est disposé à l'intersection de la surface radialement extérieure de la bande de roulement et du flanc, et d'un axe radial ZZ' distant du plan équatorial AA' d'une longueur L_{A} comprise entre ½ (L-60mm) et ½ (L-10mm), L étant la grosseur boudin nominale, et
- ledit point E est disposé, au choix, dans un rayon compris dans :
∘ R₂ < E < (0,75 R₁ + 0,25R₂), R₂ étant le rayon du haut du crochet de jante et R₁ étant le rayon de la grosseur boudin nominal - (Intervalle I), ou dans
∘ 0,95R₁ < E < (0,75R_{A} + 0,25 R₁), R₁ étant le rayon de la grosseur boudin nominal, et R_{A} étant le rayon du point A (Intervalle II),
**en ce qu'**au moins une protubérance (8) interrompt partiellement ou totalement ou n'interrompt pas ledit sillon circonférentiel (10),
**en ce qu'**au moins deux protubérances (8) ont une longueur différente l'une de l'autre,
**en ce que** chaque protubérance (8) a une hauteur moyenne comprise entre 3 et 10mm, **en ce que** deux protubérances (8) adjacentes sont espacées l'une de l'autre d'une distance moyenne inférieure ou égale à 2 fois la largeur moyenne d'une protubérance,
et **en ce que** chaque protubérance (8) a une largeur moyenne comprise entre 4 et 12 mm.

2. Pneumatique selon la revendication 1, **caractérisé en ce qu'au** moins une protubérance (8) a une hauteur et une longueur, ladite hauteur étant maximum au centre de ladite longueur de ladite protubérance,

3. Pneumatique selon la revendication 1, **caractérisé en ce que** la hauteur moyenne de chaque protubérance (8), est de préférence comprise entre 5 et 8mm.

4. Pneumatique selon l'une des revendications 1 ou 3, **caractérisé en ce que** chaque protubérance (8) a une hauteur moyenne supérieure à 80% de la hauteur maximale sur au moins 80% de la distance comprise entre les points A et E.

5. Pneumatique selon la revendication 1, **caractérisé en ce que** chaque protubérance (8) présente un angle de dépouille α inférieure ou égale à 20°, et de préférence compris entre 5 et 8°.

6. Pneumatique selon la revendication 1, **caractérisé en ce que** deux protubérances (8) adjacentes sont sensiblement parallèles l'une par rapport à l'autre.

7. Pneumatique selon la revendication 1, **caractérisé en ce que** les protubérances (8) recouvrent au moins 40% de la surface circonférentielle totale du flanc entre les points A et E.

8. Pneumatique selon la revendication 1, **caractérisé en ce que** chaque protubérance (8), de forme géométrique définie ou quelconque, comprend une fibre neutre, passant par une extrémité radialement la plus intérieure et par une extrémité radialement la plus extérieure, et présentant un angle β, par rapport à la direction radiale ZZ', compris entre -60° et +60°.

9. Pneumatique selon la revendication 1, **caractérisé en ce que** le creux (9) entre deux protubérances (8) adjacentes s'étend axialement dans le prolongement du creux d'un sillon circonférentiel de la bande de roulement, passant par le point A, ledit sillon étant disposé sur au moins une extrémité axiale de la bande de roulement.

10. Pneumatique selon la revendication 1, **caractérisé en ce que** la somme de la largeur des protubérances, dans la direction circonférentielle est supérieure ou égale à 60% de la longueur circonférentielle totale.

11. Pneumatique selon la revendication 1 ou 9, **caractérisé en ce qu'**il présente un rapport [somme des largeurs totales de chaque protubérance] / 2πR supérieure ou égale à 30%, et plus préférentiellement supérieure ou égale à 60% et inférieure ou égale à 70%, les largeurs de chaque protubérance (8) étant définies à 50% de la hauteur totale de ladite protubérance (8) et le rayon R du pneumatique étant compris dans l'intervalle R_{E}<R<Rₐ avec Rₐ le rayon du point A et R_{E} le rayon du point E.

12. Ensemble monté comprenant une jante et un pneumatique tel que défini selon l'une des revendications précédentes.

## Patentansprüche

1. Reifen für Rollanordnung, umfassend eine Felge und einen Reifen, wobei der Reifen mindestens eine Karkassenarmierung (2) aufweist, die außerhalb einer Scheitelarmierung (3) radial überragt ist, die sich selbst radial innerhalb eines Laufstreifens (4) befindet, der zwei Enden aufweist, die axial am weitesten außen gelegen sind, wobei die Scheitelarmierung (3) aus mindestens einer Schicht aus Verstärkungselementen gebildet ist, wobei der Laufstreifen (4) über zwei Flanken (6) mit zwei Wülsten (5) verbunden ist, wobei die Wülste (5) dazu bestimmt sind, mit einer Felge (7) in Kontakt zu treten, die Felgenhakenoberteile (7b) aufweist, wobei jeder Wulst (5) mindestens ein Umfangsverstärkungselement aufweist, wobei die Flanken (6) an ihrer Außenfläche eine Reihe von Vorsprüngen (8) aufweisen, die mit Höhlungen (9) abwechseln, wobei jeder Vorsprung (8) regelmäßig oder unregelmäßig und durchgehend auf der Fläche der Flanke (6) zwischen einem Punkt A und einem Punkt E angeordnet ist, wobei der Laufstreifen (4) an mindestens einem Ende, das axial am weitesten außen gelegen ist (4a), eine Umfangsrille (10) umfasst, **dadurch gekennzeichnet, dass**
- der Punkt A an der Überschneidung der radial äußeren Fläche des Laufstreifens und der Flanke, und einer radialen Achse ZZ', die um eine Länge L_{A} zwischen ½ (L - 60mm) et ½ (L - 10mm) von der Äquatorialebene AA' entfernt ist, wobei L die Nennwulstdicke ist, und
- der Punkt E wahlweise in einem Radius angeordnet ist, der in Folgendem enthalten ist:
∘ R₂ < E < (0,75R₁ + 0,25R₂), wobei R₂ der Radius des Felgenhakenoberteils und R₁ der Radius der Nennwulstdicke ist - (Abstand I), oder in
∘ 0,95R₁ < E < (0,75Rₐ + 0,25 R₁), wobei R₁ der Radius der Nennwulstdicke und R_{A} der Radius des Punkts A ist (Abstand II),
dadurch, dass mindestens ein Vorsprung (8) die Umfangsrille (10) teilweise oder vollständig oder nicht unterbricht,
dadurch, dass mindestens zwei Vorsprünge (8) eine voneinander unterschiedliche Länge aufweisen, dadurch, dass jeder Vorsprung (8) eine mittlere Höhe zwischen 3 und 10 mm aufweist,
dadurch, dass zwei benachbarte Vorsprünge (8) um einen mittleren Abstand voneinander beabstandet sind, der kleiner oder gleich 2 Mal die mittlere Breite eines Vorsprungs ist,
und dadurch, dass jeder Vorsprung (8) eine mittlere Breite zwischen 4 und 12 mm aufweist.

2. Reifen nach Anspruch 1, **dadurch gekennzeichnet, dass** mindestens ein Vorsprung (8) eine Höhe und eine Länge aufweist, wobei die Höhe in der Mitte der Länge des Vorsprungs das Maximum beträgt.

3. Reifen nach Anspruch 1, **dadurch gekennzeichnet, dass** die mittlere Höhe jedes Vorsprungs (8) vorzugsweise zwischen 5 und 8 mm beträgt.

4. Reifen nach einem der Ansprüche 1 oder 3, **dadurch gekennzeichnet, dass** jeder Vorsprung (8) eine mittlere Höhe von mehr als 80% der maximalen Höhe über mindestens 80 % des Abstands zwischen den Punkten A und E aufweist.

5. Reifen nach Anspruch 1, **dadurch gekennzeichnet, dass** jeder Vorsprung (8) einen Freiwinkel α aufweist, der kleiner oder gleich 20° ist und vorzugsweise zwischen 5 und 8° liegt.

6. Reifen nach Anspruch 1, **dadurch gekennzeichnet, dass** zwei benachbarte Vorsprünge (8) im Wesentlichen in Bezug aufeinander parallel sind.

7. Reifen nach Anspruch 1, **dadurch gekennzeichnet, dass** die Vorsprünge (8) mindestens 40 % der Gesamtumfangsfläche der Flanke zwischen den Punkten A und E bedecken.

8. Reifen nach Anspruch 1, **dadurch gekennzeichnet, dass** jeder Vorsprung (8) einer festgelegten oder beliebigen geometrischen Form eine neutrale Faser aufweist, die durch ein Ende, das radial am weitesten innen gelegen ist, und durch ein Ende, das radial am weitesten außen gelegen ist, verläuft, und einen Winkel β in Bezug auf die radiale Richtung ZZ' zwischen -60° und +60 ° aufweist.

9. Reifen nach Anspruch 1, **dadurch gekennzeichnet, dass** sich die Höhlung (9) zwischen zwei benachbarten Vorsprüngen (8) in der Verlängerung der Höhlung einer Umfangsrille des Laufstreifens durch den Punkt A axial erstreckt, wobei die Rille an mindestens einem axialen Ende des Laufstreifens angeordnet ist.

10. Reifen nach Anspruch 1, **dadurch gekennzeichnet, dass** die Summe der Breite der Vorsprünge in der Umfangsrichtung größer oder gleich 60 % der Gesamtumfangslänge ist.

11. Reifen nach Anspruch 1 oder 9, **dadurch gekennzeichnet, dass** er ein Verhältnis [Summe der Gesamtbreiten jedes Vorsprungs] / 2πR aufweist, das größer oder gleich 30 %, und besser noch größer oder gleich 60 % und kleiner oder gleich 70 % ist, wobei die Breiten jedes Vorsprungs (8) bei 50 % der Gesamthöhe des Vorsprungs (8) festgelegt sind und der Radius R des Reifens in dem Abstand R_{E} < R < Rₐ liegt, wobei Rₐ der Radius des Punkts A und R_{E} der Radius des Punkts E ist.

12. Montierte Anordnung, umfassend eine Felge und einen Reifen, wie nach einem der vorhergehenden Ansprüche definiert.

## Claims

1. Tyre for a rolling assembly comprising a rim and a tyre, the said tyre comprising at least one carcass reinforcement (2) surmounted radially on the outside by a crown reinforcement (3), itself radially on the inside of a tread (4) having two axially outermost ends, the said crown reinforcement (3) being made up of at least one layer of reinforcing elements, the said tread (4) being connected to two beads (5) by two sidewalls (6), the said beads (5) being intended to come into contact with a rim (7) having rim flange tops (7b), each bead (5) comprising at least one circumferential reinforcing element, the said sidewalls (6) comprising, on their exterior surface, a series of protuberances (8) alternating with voids (9), each protuberance (8) being positioned at the surface of the sidewall (6), regularly or irregularly and continuously between a point A and a point E, the said tread (4) comprising, at least at one axially outermost end (4a), a circumferential groove (10), **characterized in that**
- the said point A is arranged at the intersection of the radially exterior surface of the tread and of the sidewall, with a radial axis ZZ' distant from the equatorial plane AA' by a length L_{A} of between ½ (L-60 mm) and ½ (L-10 mm), L being the external section width, and
- the said point E is arranged, according to choice, at a radius in the range:
∘ R₂ < E < (0.75 R₁ + 0.25R₂), R₂ being the radius at the top of the rim flange and R₁ being the radius at the external section width - (interval I), or in the range
∘ 0.95R₁ < E < (0.75R_{A} + 0.25 R₁), R₁ being the radius at the external section width and R_{A} being the radius at the point A (interval II),
**in that** at least one protuberance (8) partially or completely interrupts or does not interrupt the said circumferential groove (10),
**in that** at least two protuberances (8) have different lengths from one another,
**in that** each protuberance (8) has a mean height of between 3 and 10 mm,
**in that** two adjacent protuberances (8) are spaced apart by a mean distance less than or equal to twice the mean width of a protuberance,
and **in that** each protuberance (8) has a mean width of between 4 and 12 mm.

2. Tyre according to Claim 1, **characterized in that** at least one protuberance (8) has a height and a length, the said height being optimal at the centre of the said length of the said protuberance.

3. Tyre according to Claim 3, **characterized in that** the mean height of each protuberance (8) is preferably between 5 and 8 mm.

4. Tyre according to either of Claims 1 and 3, **characterized in that** each protuberance (8) has a mean height greater than 80% of the maximum height over at least 80% of the distance between the points A and E.

5. Tyre according to Claim 1, **characterized in that** each protuberance (8) has a relief angle α less than or equal to 20° and preferably of between 5 and 8°.

6. Tyre according to Claim 1, **characterized in that** two adjacent protuberances (8) are substantially parallel to one another.

7. Tyre according to Claim 1, **characterized in that** the protuberances (8) cover at least 40% of the total circumferential surface area of the sidewall between the points A and E.

8. Tyre according to Claim 1, **characterized in that** each protuberance (8), of defined or arbitrary geometric shape, has a neutral fibre passing through a radially innermost end and through a radially outermost end and set at an angle β, with respect to the radial direction ZZ', of between -60° and +60°.

9. Tyre according to Claim 1, **characterized in that** the void (9) between two adjacent protuberances (8) extends axially in the continuation of the void of a circumferential groove of the tread, passing through the point A, the said groove being arranged on at least one axial end of the tread.

10. Tyre according to Claim 1, **characterized in that** the sum of the width of the protuberances, in the circumferential direction, is greater than or equal to 60% of the total circumferential length.

11. Tyre according to Claim 1 or 9, **characterized in that** it has a [sum of the total widths of each protuberance] / 2πR ratio greater than or equal to 30% and more preferably greater than or equal to 60% and less than or equal to 70%, the widths of each protuberance (8) being defined at 50% of the total height of the said protuberance (8) and the tyre radius R lying in the interval RE<R<Ra where Ra is the radius at the point A and RE is the radius at the point E.

12. Mounted assembly comprising a rim and a tyre as defined in any one of the preceding claims.
